# EUROPEAN PATENT APPLICATION

(11) **EP 4 760 861 A1**
(43) Date of publication of application: **17.06.2026**
(21) Application number: 25833280.8
(22) Date of filing: 24.06.2025
(51) Int. Cl.: H01M 10/42, H01M 10/052, H02J 7/00, H01M 10/44

(54) **BATTERY CELL, BATTERY CELL ASSEMBLY, AND BATTERY PACK**

(30) Priority: 04.07.2024 KR 20240087991
(71) Applicant: LG Energy Solution, Ltd., Seoul 07335 (KR)
(72) Inventor: KIM, Hwi Jung, Daejeon 34122 (KR); KIM, Ji Hyun, Daejeon 34122 (KR); LIM, Soo Hyun, Daejeon 34122 (KR); SEONG, Eun Kyu, Daejeon 34122 (KR)
(74) Representative: Plasseraud IP
(86) International application number: PCT/KR2025/008748
(87) International publication number: WO 2026/010221

(57) **Abstract**

According to exemplary embodiments, a battery cell is provided. The battery cell includes an electrode including a positive electrode, a negative electrode, and a separator; a cell case including an accommodating part in which the electrode is accommodated and a terrace surrounding the accommodating part; and a beat generator coupled to the cell case, wherein the beat generator is configured to apply an acoustic beat into the cell case.

## Description

### [Technical Field]

The present disclosure relates to a battery cell, a battery cell assembly, and a battery pack.

This application claims the benefit of priority from Korean Patent Application No. 10-2024-0087991, filed on July 4, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Due to the expansion of the electric vehicle market, the demand for fast charging of secondary batteries has been increasing rapidly in recent years. In the case of electric vehicles, reducing charging time significantly improves user convenience and plays an important role in the popularization of electric vehicles. Users expect to be able to charge electric vehicles within a time similar to the time it takes to refuel gasoline vehicles.

### [Summary]

### [Technical Problem]

The technical problem to be solved by the present disclosure is to provide a battery cell having an improved charging speed.

### [Technical Solution]

According to exemplary embodiments of the present disclosure to solve the above-described problem, a battery cell is provided. The battery cell includes an electrode including a positive electrode, a negative electrode, and a separator; a cell case including an accommodating part in which the electrode is accommodated and a terrace surrounding the accommodating part; and a beat generator coupled to the cell case, wherein the beat generator is configured to apply an acoustic beat into the cell case.

The beat generator includes a first acoustic wave generator configured to generate a first acoustic wave and a second acoustic wave generator configured to generate a second acoustic wave, and the first frequency of the first acoustic wave is different from the second frequency of the second acoustic wave.

The frequency of each of the first and second acoustic waves is in a range of 10 MHz to 200 MHz, and a difference in frequency of each of the first and second acoustic waves is in a range of 1 MHz to 5 MHz.

The first acoustic wave generator includes a first interdigital transducer having a first period, and the second acoustic wave generator includes a second interdigital transducer having a second period different from the first period.

The first and second acoustic wave generators are spaced apart from each other with the cell case interposed therebetween.

Each of the first and second acoustic wave generators is on the first surface of the cell case.

The distance between the first and second acoustic wave generators is 10 cm or less.

Each of the first and second acoustic wave generators is coupled to the terrace.

One of the first and second acoustic wave generators is coupled to the accommodating part.

Each of the first and second acoustic wave generators is spaced apart from each other with the accommodating part interposed therebetween.

The battery cell further includes a first electrode terminal and a second electrode terminal connected to the electrode, and the first and second acoustic wave generators are spaced apart from the first and second electrode terminals with the accommodating part interposed therebetween.

The battery cell further includes a first electrode terminal and a second electrode terminal connected to the electrode, and one of the first and second acoustic wave generators is interposed between the first and second electrode terminals.

### [Advantageous Effects]

According to exemplary embodiments of the present disclosure, a battery cell may include a beat generator coupled to a cell case. The beat generator can transmit an acoustic beat to a long distance.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a plan view illustrating a battery cell according to exemplary embodiments.
FIG. 2 is a cross-sectional view taken along line 1I-1I' of FIG. 1.
FIG. 3 is a plan view illustrating acoustic wave generators according to exemplary embodiments.
FIG. 4 is a plan view illustrating acoustic wave generators according to other exemplary embodiments.
FIG. 5 is a plan view illustrating acoustic wave generators according to other exemplary embodiments.
FIG. 6 is a plan view illustrating a battery cell according to exemplary embodiments.
FIG. 7 is a plan view illustrating a battery cell according to exemplary embodiments.
FIG. 8 is a plan view illustrating a battery cell according to exemplary embodiments.
FIG. 9 is a plan view illustrating a battery cell according to exemplary embodiments.
FIG. 10 is a plan view illustrating a battery cell according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

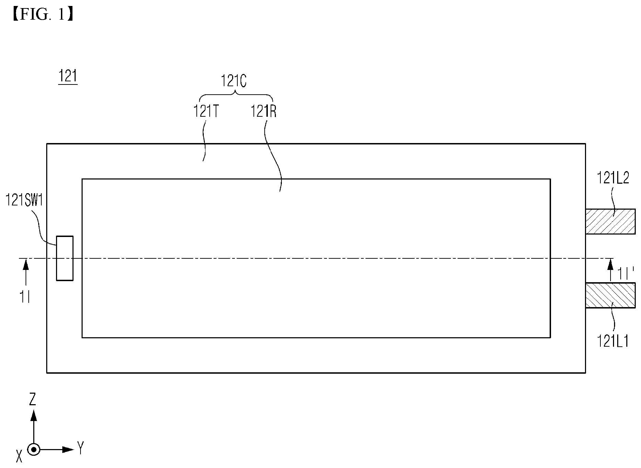

FIG. 1 is a plan view illustrating a battery cell according to exemplary embodiments.

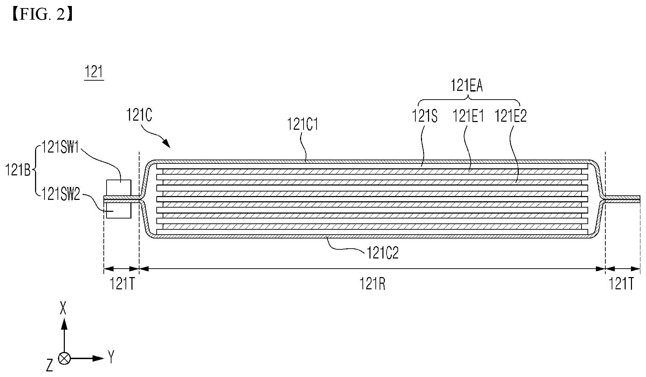

FIG. 2 is a cross-sectional view taken along line 1I-1I' of FIG. 1.

Referring to FIG. 1 and FIG. 2, a battery cell 121 may include a cell case 121C, an electrode assembly 121EA, a first electrode terminal 121L1, a second electrode terminal 121L2, and a beat generator 121B. The battery cell 121 may further include an electrolyte.

According to exemplary embodiments, the battery cell 121 may include one of a cylindrical battery cell, a prismatic battery cell, and a pouch-type battery cell. The electrode assembly of the cylindrical battery cell is embedded in a cylindrical metal can. The electrode assembly of the prismatic battery cell is embedded in a prismatic metal can. The electrode assembly of the pouch-type battery cell is embedded in a pouch case including an aluminum laminate sheet. Hereinafter, the technical idea of the present disclosure will be described based on an example in which the battery cell 121 is a pouch-type battery cell, but those skilled in the art will be able to easily arrive at an example in which the battery cell 121 is one of a cylindrical battery cell and a prismatic battery cell based on what is described herein.

The electrode assembly 121EA may include first electrodes 121E1, second electrodes 121E2, and separators 121S. The first electrodes 121E1 and the second electrodes 121E2 may have opposite polarities. For example, when each of the first electrodes 121E1 is a positive electrode, each of the second electrodes 121E2 may be a negative electrode. Conversely, for example, when each of the first electrodes 121E1 is a negative electrode, each of the second electrodes 121E2 may be a positive electrode.

The positive electrode may include a positive electrode current collector and a positive electrode active material. The thickness of the positive electrode current collector may be in a range of about 3 µm to about 500 µm. The positive electrode current collector may not cause chemical changes in the finally manufactured secondary battery and may have high electrical conductivity. The positive electrode current collector may include, for example, any one of stainless steel, aluminum, nickel, titanium, calcined carbon, and aluminum. The positive electrode current collector may include stainless steel surface treated with carbon, nickel, titanium, silver, and the like. The surface of the positive electrode current collector may include a fine uneven structure to increase adhesion of the active material. The shape of the positive electrode current collector may include any one of a film, a sheet, a foil, a net, porous, foam, and nonwoven fabric.

The positive electrode active material is a material that can cause an electrochemical reaction. The positive electrode active material may be a lithium transition metal oxide. The positive electrode active material may include, for example, layered compounds such as lithium cobalt oxide (LiCoO₂) and lithium nickel oxide (LiNiO₂) substituted with one or more transition metals; lithium manganese oxide substituted with one or more transition metals; lithium nickel-based oxide represented by the chemical formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxide represented by Li_{1+z}Ni_{b}Mn_{c}Co_{1-(b+c+d)}M_{d}O₍₂₋ₑ₎Aₑ (where - 0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl), such as Li_{1+z}Ni_{1/3}Co_{1/3}Mn_{1/3}O₂ and Li_{1+z}Ni_{0.4}Mn_{0.4}Co_{0.2}O₂; and olivine-based lithium metal phosphate represented by the chemical formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

The negative electrode may include a negative electrode current collector and a negative electrode active material. The thickness of the negative electrode current collector may be in a range of about 3 µm to about 500 µm. The negative electrode current collector may not cause chemical changes in the finally manufactured secondary battery and may have high electrical conductivity. The negative electrode current collector may include any one of copper, stainless steel, aluminum, nickel, titanium, calcined carbon, and aluminum-cadmium alloy. The negative electrode current collector may include stainless steel surface treated with carbon, nickel, titanium, silver, and the like. The surface of the negative electrode current collector may include a fine uneven structure to increase adhesion of the active material. The shape of the negative electrode current collector may include any one of a film, a sheet, a foil, a net, porous, foam, and nonwoven fabric.

The negative electrode active material may include, for example, carbon such as non-graphitizable carbon and graphite-based carbon. The negative electrode active material may include, for example, metal composite oxides such as LiₓFe₂O₃ (0≤x≤1), LiₓWO₂ (0≤x≤1), and SnₓMe₁₋ₓMe'_{y}O_{z} (where Me is any one of Mn, Fe, Pb, and Ge, Me' is any one of Al, B, P, Si, Group 1, Group 2, Group 3 elements of the periodic table, and halogens; 0<x≤1; 1≤y≤3; and 1≤z≤8). The negative electrode active material may include, for example, any one of lithium metal; lithium alloy; silicon-based alloy; and tin-based alloy. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may include, for example, conductive polymers such as polyacetylene; Li-Co-Ni-based materials, and the like.

The first electrodes 121E1 and the second electrodes 121E2 may alternate with the separators 121S. Accordingly, one of the first electrodes 121E1 and the second electrodes 121E2 may be interposed between adjacent two of the separators 121S. Each of the separators 121S may be in contact with at least one of the first electrodes 121E1 and the second electrodes 121E2. Each of the separators 121S can isolate the first electrodes 121E1 and the second electrodes 121E2 by preventing direct contact between the first electrodes 121E1 and the second electrodes 121E2, thereby preventing formation of an unwanted closed loop due to a short circuit between the first electrodes 121E1 and the second electrodes 121E2.

Each of the first electrodes 121E1 and the second electrodes 121E2 may have a flat film shape. A direction substantially vertical to each of the first electrodes 121E1 and the second electrodes 121E2 is defined as an X direction, and directions substantially parallel to each of the first electrodes 121E1 and the second electrodes 121E2 are defined as a Y direction and a Z direction. The X direction, the Y direction, and the Z direction may be substantially vertical to each other.

The electrode assembly 121EA may be any one of a jelly-roll type and a stack type. The electrode assembly 121EA of the jelly-roll type may include a wound structure of the first electrodes 121E1, the second electrodes 121E2, and the separators 121S. The electrode assembly 121EA of the stack type may include the first and second electrodes 121E1 and 121E2 stacked alternately and the separators 121S between the first and second electrodes 121E1 and 121E2. The stacking direction of the first and second electrodes 121E1 and 121E2 of the electrode assembly 121EA of the stack type may be the X direction.

Each of the first electrodes 121E1 may include a first electrode tab. The first electrode tab of each of the first electrodes 121E1 may be connected to the first electrode terminal 121L1. The first electrode tab of each of the first electrodes 121E1 may be short-circuited with the first electrode terminal 121L1. The first electrode tab of each of the first electrodes 121E1 may be welded to the first electrode terminal 121L1.

Each of the second electrodes 121E2 may include a second electrode tab. The second electrode tab of each of the second electrodes 121E2 may be connected to the second electrode terminal 121L2. The second electrode tab of each of the second electrodes 121E2 may be short-circuited with the second electrode terminal 121L2. The second electrode tab of each of the second electrodes 121E2 may be welded to the second electrode terminal 121L2.

Each of the first electrode terminal 121L1 and the second electrode terminal 121L2 may be, for example, an electrode lead. Each of the first electrode terminal 121L1 and the second electrode terminal 121L2 may protrude from the cell case 121C in the Y direction. According to exemplary embodiments, the battery cell 121 may be a unidirectional cell, and the first electrode terminal 121L1 and the second electrode terminal 121L2 may protrude from the same side of the cell case 121C.

The cell case 121C may include an inner resin layer, a metal layer, and an outer resin layer. An adhesive and a corrosion prevention layer may be further provided between the inner resin layer and the metal layer and between the outer resin layer and the metal layer.

The inner resin layer may have thermal adhesiveness and may be referred to as a sealant layer. The inner resin layer enables sealing of the cell case 121C. The inner resin layer may include, for example, polyolefin-based resins such as polypropylene (PP) and polyethylene (PE). The metal layer may include one of an alloy of iron, carbon, chromium, and manganese, an alloy of iron, chromium, and nickel, and aluminum. The metal layer may be a gas barrier. The metal layer can block the entry and exit of gas from the cell case 121C. The outer resin layer may be a surface treatment layer. The outer resin layer may include a material having abrasion resistance and heat resistance, such as nylon resin.

The cell case 121C may be provided by bonding a first cell case 121C1 and a second cell case 121C2. Each of the first cell case 121C1 and the second cell case 121C2 may include a cup-shaped accommodating part 121R. The accommodating part 121R may be formed by a pouch forming process. The electrode assembly 121EA may be accommodated in the accommodating part 121R.

Edges of the first cell case 121C1 may be bonded to edges of the second cell case 121C2, and accordingly, the cell case 121C may be provided. A terrace 121T may surround the accommodating part 121R. In this example, the sealing portion of the first cell case 121C1 and the second cell case 121C2 may be the terrace 121T, but the sealing portion of the first cell case 121C1 and the second cell case 121C2 may be a portion of the terrace 121T.

The beat generator 121B may be coupled to the cell case 121C. The beat generator 121B may include first and second acoustic wave generators 121SW1 and 121SW2 coupled to the cell case 121C. Each of the first and second acoustic wave generators 121SW1 and 121SW2 may be attached to the cell case 121C. Each of the first and second acoustic wave generators 121SW1 and 121SW2 may be a surface acoustic wave device.

The first and second acoustic wave generators 121SW1 and 121SW2 may be spaced apart with the cell case 121C interposed therebetween. The first and second acoustic wave generators 121SW1 and 121SW2 may be spaced apart with the terrace of the cell case 121C interposed therebetween. The first and second acoustic wave generators 121SW1 and 121SW2 may be attached to the terrace of the cell case 121C. The first and second acoustic wave generators 121SW1 and 121SW2 may overlap in the X direction. The first and second acoustic wave generators 121SW1 and 121SW2 may be spaced apart from the first and second electrode terminals 121L1 and 121L2 in the Y direction with the accommodating part 121R (or the electrode assembly 121EA) interposed therebetween.

The first acoustic wave generator 121SW1 may be configured to generate a first acoustic wave having a first frequency. Since the first acoustic wave generator 121SW1 is in contact with the cell case 121C, the first acoustic wave may propagate along the cell case 121C in the form of a surface wave. The first acoustic wave may propagate from the cell case 121C to the separators 121S.

The second acoustic wave generator 121SW2 may be configured to generate a second acoustic wave having a second frequency. Since the second acoustic wave generator 121SW2 is in contact with the cell case 121C, the second acoustic wave may propagate along the cell case 121C in the form of a surface wave. The second acoustic wave may propagate from the cell case 121C to the separators 121S.

The frequency of each of the first and second acoustic waves may be in a range of 10 MHz to 200 MHz. The first and second acoustic waves may have different frequencies. A difference in the frequency of each of the first and second acoustic waves may be in a range of 1 MHz to 5 MHz.

According to exemplary embodiments, due to the overlap of the first and second acoustic waves, a beat may be applied to the battery cell 121. The beat refers to a phenomenon of periodic increase and decrease in the amplitude of a resultant wave due to the overlap of the first and second acoustic waves. The beat can generally propagate to a long distance compared to a surface acoustic wave. The battery cell 121 according to exemplary embodiments includes the beat generator 121B configured to apply a beat to the cell case 121C, so that even when the length of the battery cell 121 (for example, the length in the Y direction) is long, the surface acoustic wave can be applied throughout the battery cell 121. The surface acoustic wave can cause circulation in the electrolyte inside the cell to remove and/or alleviate the electrolyte concentration gradient, and accordingly, the charging speed of the battery cell 121 can be improved.

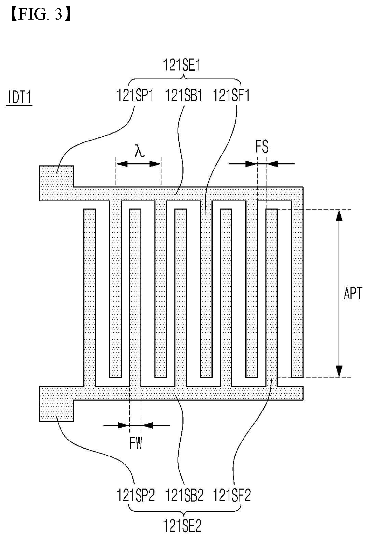

FIG. 3 is a plan view illustrating acoustic wave generators according to exemplary embodiments.

Referring to FIG. 2 and FIG. 3, each of the first and second acoustic wave generators 121SW1 and 121SW2 may include an interdigital transducer IDT1. The interdigital transducer IDT1 may include a first electrode 121SE1 and a second electrode 121SE2. The interdigital transducer IDT1 may be provided by photolithography.

The first electrode 121SE1 may include a first pad 121SP1, a first bus bar 121SB1, and a plurality of first fingers 121SF1. For connection with an external connection terminal, the planar shape of the first pad 121SP1 may be a rectangle having a relatively larger area than the first bus bar 121SB1. The first bus bar 121SB1 may be connected to the pad and may extend in one direction. Each of the plurality of first fingers 121SF1 may be connected to the first bus bar 121SB1 and may extend from the first bus bar 121SB1 to the second bus bar 121SB2. According to exemplary embodiments, each of the plurality of first fingers 121SF1 may be substantially vertical to the first bus bar 121SB1.

The second electrode 121SE2 may include a second pad 121SP2, a second bus bar 121SB2, and a plurality of fingers 121SF2. For connection with an external connection terminal, the planar shape of the second pad 121SP2 may be a rectangle having a relatively larger area than the second bus bar 121SB2. The second bus bar 121SB2 may be connected to the pad and may extend in one direction. The second bus bar 121SB2 may be substantially parallel to the first bus bar 121SB1. Accordingly, the distance between the second bus bar 121SB2 and the first bus bar 121SB1 may be constant.

Each of the plurality of second fingers 121SF2 may be connected to the second bus bar 121SB2 and may extend from the second bus bar 121SB2 to the first bus bar 121SB1. According to exemplary embodiments, each of the plurality of second fingers 121SF2 may be substantially vertical to the second bus bar 121SB2.

The plurality of first fingers 121SF1 and the plurality of second fingers 121SF2 may alternate in an extension direction of the first and second bus bars 121SB1 and 121SB2. Accordingly, one of the plurality of first fingers 121SF1 may be interposed between adjacent two of the plurality of second fingers 121SF2, and one of the plurality of second fingers 121SF2 may be interposed between adjacent two of the plurality of first fingers 121SF1.

Parameters defining characteristics of the interdigital transducer IDT1 may include a width FW of each of the plurality of first fingers 121SF1 and the plurality of second fingers 121SF2, a spacing FS between adjacent ones of the plurality of first fingers 121SF1 and the plurality of second fingers 121SF2, a period λ of each of the plurality of first fingers 121SF1 and the plurality of second fingers 121SF2, and an opening width APT, which is a distance between an end of each of the plurality of first fingers 121SF1 and an end of each of the plurality of second fingers 121SF2.

According to exemplary embodiments, the interdigital transducer IDT of the first acoustic wave generator 121SW1 may be different from the interdigital transducer IDT of the second acoustic wave generator 121SW2. According to exemplary embodiments, parameters of the interdigital transducer IDT of the first acoustic wave generator 121SW1 may be different from parameters of the interdigital transducer IDT of the second acoustic wave generator 121SW2. According to exemplary embodiments, at least one of the width FW, the spacing FS, the period λ, and the opening width APT of the interdigital transducer IDT of the first acoustic wave generator 121SW1 may be different from a corresponding one of the width FW, the spacing FS, the period λ, and the opening width APT of the interdigital transducer IDT of the second acoustic wave generator 121SW2.

### (Second Embodiment)

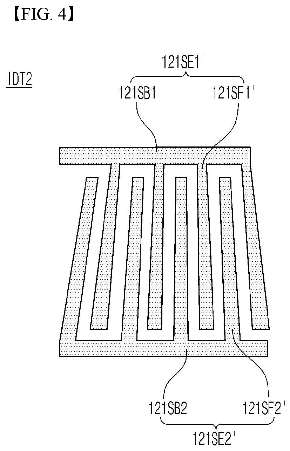

FIG. 4 is a plan view illustrating an interdigital transducer IDT2 according to other exemplary embodiments.

In this example, at least one of the first and second acoustic wave generators 121SW1 and 121SW2 (refer to FIG. 2) may include an interdigital transducer IDT2. That is, the interdigital transducer IDT1 of FIG. 3 may be replaced by the interdigital transducer IDT2.

The interdigital transducer IDT2 may include first and second electrodes 121SE1' and 121SE2'. The interdigital transducer IDT2 may have a slanted structure.

The first electrode 121SE1' may include a first bus bar 121SB1 and a plurality of first fingers 121SF1'. Each of the plurality of first fingers 121SF1' may be connected to the first bus bar 121SB1 and may extend from the first bus bar 121SB1 to the second bus bar 121SB2. According to exemplary embodiments, each of the plurality of first fingers 121SF1' may be oblique to the first bus bar 121SB1.

The second electrode 121SE2' may include a second bus bar 121SB2 and a plurality of second fingers 121SF2'. Each of the plurality of second fingers 121SF2' may be connected to the second bus bar 121SB2 and may extend from the second bus bar 121SB2 to the first bus bar 121SB1. According to exemplary embodiments, each of the plurality of second fingers 121SF2' may be oblique to the second bus bar 121SB2.

### (Third Embodiment)

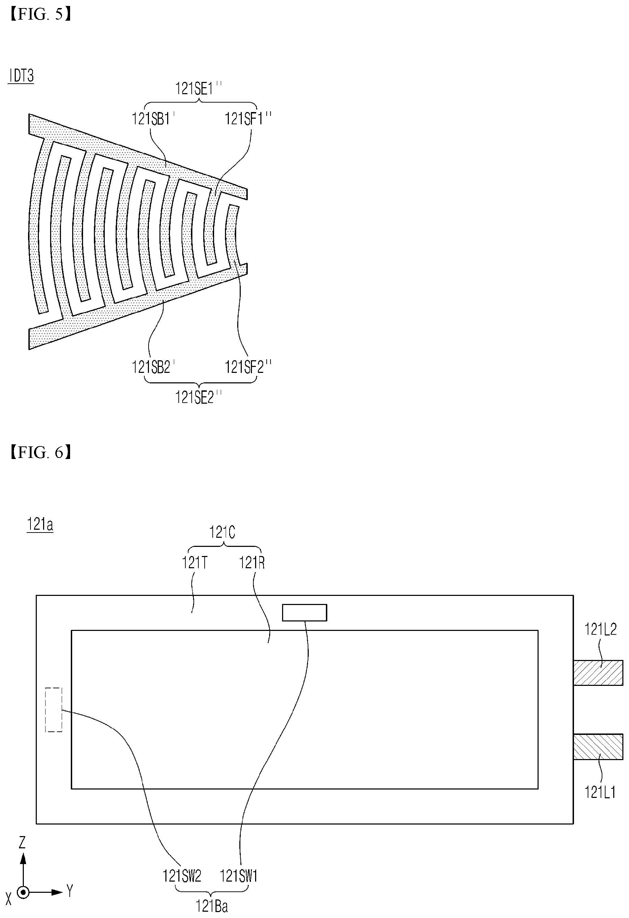

FIG. 5 is a plan view illustrating an interdigital transducer IDT3 according to other exemplary embodiments.

In this example, at least one of the first and second acoustic wave generators 121SW1 and 121SW2 (refer to FIG. 2) may include an interdigital transducer IDT3. That is, the interdigital transducer IDT1 of FIG. 3 may be replaced by the interdigital transducer IDT2.

The interdigital transducer IDT2 may include first and second electrodes 121SE1" and 121SE2". The interdigital transducer IDT2 may have a focused structure. The first electrode 121SE1" may include a first bus bar 121SB1' and a plurality of first fingers 121SF1". The second electrode 121SE2" may include a second bus bar 121SB2' and a plurality of first fingers 121SF2".

The first bus bar 121SB1' and the second bus bar 121SB2' may not be parallel. The first bus bar 121SB1' and the second bus bar 121SB2' may converge (or diverge). The plurality of first fingers 121SF1" may be connected to the first bus bar 121SB1', and the plurality of second fingers 121SF2" may be connected to the second bus bar 121SB2'. The plurality of first fingers 121SF1" and the plurality of second fingers 121SF2" may have a round shape, and accordingly, a spacing between the plurality of first fingers 121SF1" and the plurality of second fingers 121SF2" may be constant.

### (Fourth Embodiment)

FIG. 6 is a plan view illustrating a battery cell 121a according to other exemplary embodiments.

Referring to FIG. 6, the battery cell 121a may include a cell case 121C, an electrode assembly 121EA (refer to FIG. 2), a first electrode terminal 121L1, a second electrode terminal 121L2, and a beat generator 121Ba.

The cell case 121C, the electrode assembly 121EA (refer to FIG. 2), the first electrode terminal 121L1, and the second electrode terminal 121L2 are substantially the same as those described with reference to FIGS. 1 and 2, and thus redundant descriptions thereof will be omitted. In addition, the first and second acoustic wave generators 121SW1 and 121SW2 are substantially the same as those described with reference to FIGS. 1 to 5, except for their relative positions with respect to the cell case 121C.

In this example, the first and second acoustic wave generators 121SW1 and 121SW2 of the beat generator 121Ba may not overlap in the X direction. The first and second acoustic wave generators 121SW1 and 121SW2 may be spaced apart in the Y direction. The first and second acoustic wave generators 121SW1 and 121SW2 may be spaced apart in the Z direction.

The terrace 121T of the cell case 121C may surround the accommodating part 121R, and accordingly, the terrace 121T may include portions parallel to the Y direction and portions parallel to the Z direction. One of the first and second acoustic wave generators 121SW1 and 121SW2 (for example, the first acoustic wave generator 121SW1) may be coupled to a portion of the terrace 121T parallel to the Y direction, and the other one of the first and second acoustic wave generators 121SW1 and 121SW2 (for example, the second acoustic wave generator 121SW2) may be coupled to a portion of the terrace 121T parallel to the Z direction.

### (Fifth Embodiment)

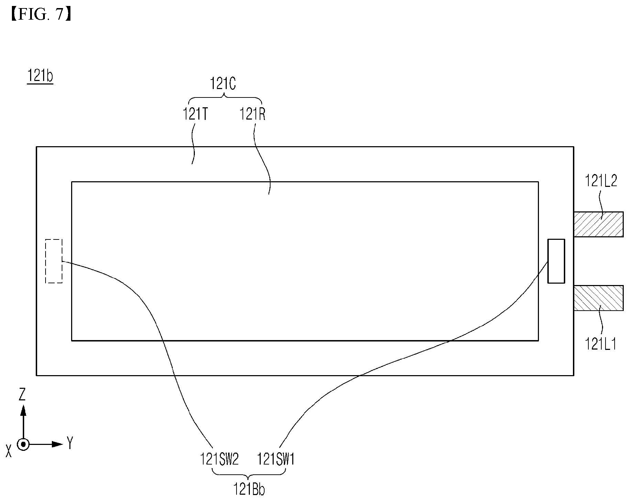

FIG. 7 is a plan view illustrating a battery cell 121b according to other exemplary embodiments.

Referring to FIG. 7, the battery cell 121b may include a cell case 121C, an electrode assembly 121EA (refer to FIG. 2), a first electrode terminal 121L1, a second electrode terminal 121L2, and a beat generator 121Bb.

The cell case 121C, the electrode assembly 121EA (refer to FIG. 2), the first electrode terminal 121L1, and the second electrode terminal 121L2 are substantially the same as those described with reference to FIGS. 1 and 2, and thus redundant descriptions thereof will be omitted. In addition, the first and second acoustic wave generators 121SW1 and 121SW2 are substantially the same as those described with reference to FIGS. 1 to 5, except for their relative positions with respect to the cell case 121C.

In this example, the first and second acoustic wave generators 121SW1 and 121SW2 of the beat generator 121Bb may not overlap in the X direction. The first and second acoustic wave generators 121SW1 and 121SW2 may be spaced apart in the Y direction.

In this example, the first and second acoustic wave generators 121SW1 and 121SW2 may be spaced apart from each other with the accommodating part 121R interposed therebetween. The first acoustic wave generator 121SW1 may be closer to the first and second electrode terminals 121L1 and 121L2 than the second acoustic wave generator 121SW2. The first acoustic wave generator 121SW1 may be interposed between the first and second electrode terminals 121L1 and 121L2 in the Z direction.

### (Sixth Embodiment)

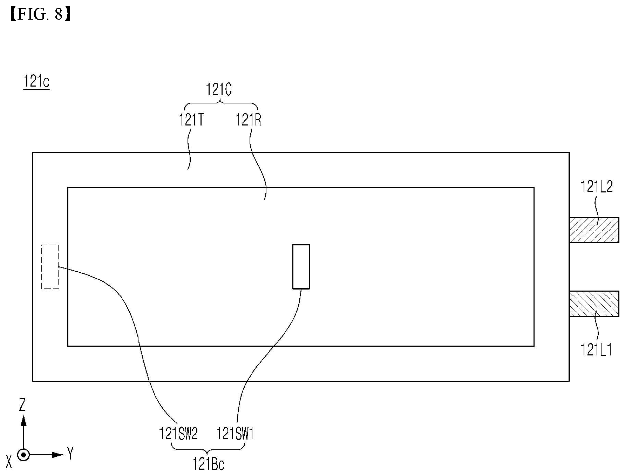

FIG. 8 is a plan view illustrating a battery cell 121c according to other exemplary embodiments.

Referring to FIG. 8, the battery cell 121c may include a cell case 121C, an electrode assembly 121EA (refer to FIG. 2), a first electrode terminal 121L1, a second electrode terminal 121L2, and a beat generator 121Bc.

The cell case 121C, the electrode assembly 121EA (refer to FIG. 2), the first electrode terminal 121L1, and the second electrode terminal 121L2 are substantially the same as those described with reference to FIGS. 1 and 2, and thus redundant descriptions thereof will be omitted. In addition, the first and second acoustic wave generators 121SW1 and 121SW2 are substantially the same as those described with reference to FIGS. 1 to 5, except for their relative positions with respect to the cell case 121C.

In this example, the first and second acoustic wave generators 121SW1 and 121SW2 of the beat generator 121Bc may not overlap in the X direction. The first and second acoustic wave generators 121SW1 and 121SW2 may be spaced apart in the Y direction.

In this example, one of the first and second acoustic wave generators 121SW1 and 121SW2 (for example, the first acoustic wave generator 121SW1) may be coupled to the accommodating part 121R, and the other one of the first and second acoustic wave generators 121SW1 and 121SW2 (for example, the second acoustic wave generator 121SW2) may be coupled to a portion of the terrace 121T parallel to the Z direction.

### (Seventh Embodiment)

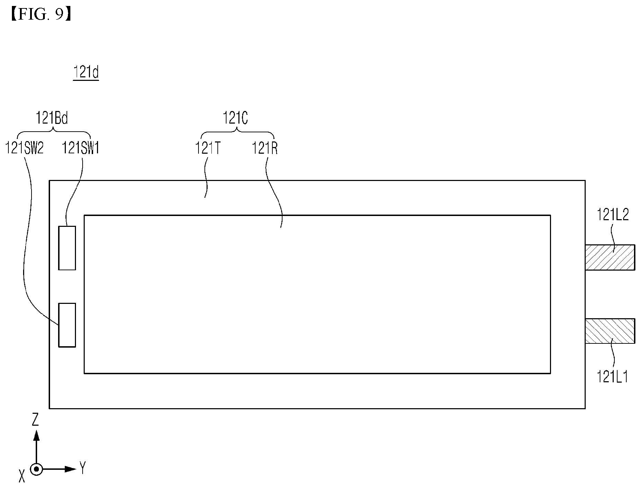

FIG. 9 is a plan view illustrating a battery cell 121d according to other exemplary embodiments.

Referring to FIG. 9, the battery cell 121d may include a cell case 121C, an electrode assembly 121EA (refer to FIG. 2), a first electrode terminal 121L1, a second electrode terminal 121L2, and a beat generator 121Bd.

The cell case 121C, the electrode assembly 121EA (refer to FIG. 2), the first electrode terminal 121L1, and the second electrode terminal 121L2 are substantially the same as those described with reference to FIGS. 1 and 2, and thus redundant descriptions thereof will be omitted. In addition, the first and second acoustic wave generators 121SW1 and 121SW2 are substantially the same as those described with reference to FIGS. 1 to 5, except for their relative positions with respect to the cell case 121C.

In this example, the first and second acoustic wave generators 121SW1 and 121SW2 of the beat generator 121Bb may not overlap in the X direction. The first and second acoustic wave generators 121SW1 and 121SW2 may be spaced apart in the Z direction.

The distance between the first and second acoustic wave generators 121SW1 and 121SW2 may be greater than 0 cm. The distance between the first and second acoustic wave generators 121SW1 and 121SW2 may be about 10 cm or less. The distance between the first and second acoustic wave generators 121SW1 and 121SW2 may be about 3 cm or less. The distance between the first and second acoustic wave generators 121SW1 and 121SW2 may be about 0.5 cm or less.

In this example, the first and second acoustic wave generators 121SW1 and 121SW2 may be on the same surface of the cell case 121C. That is, the cell case 121C may not be interposed between the first and second acoustic wave generators 121SW1 and 121SW2.

According to exemplary embodiments, the first and second acoustic wave generators 121SW1 and 121SW2 may overlap in the Z direction. According to exemplary embodiments, the first and second acoustic wave generators 121SW1 and 121SW2 may not overlap in the Y direction. According to exemplary embodiments, the first and second acoustic wave generators 121SW1 and 121SW2 may not overlap in the X direction.

The terrace 121T of the cell case 121C may surround the accommodating part 121R, and accordingly, the terrace 121T may include portions parallel to the Y direction and portions parallel to the Z direction. Each of the first and second acoustic wave generators 121SW1 and 121SW2 may be coupled to a portion of the terrace 121T parallel to the Y direction. Each of the first and second acoustic wave generators 121SW1 and 121SW2 may be spaced apart from the first and second electrode terminals 121L1 and 121L2 with the accommodating part 121R (or the electrode assembly 121EA (refer to FIG. 2)) interposed therebetween, but is not limited thereto. Each of the first and second acoustic wave generators 121SW1 and 121SW2 may be interposed between the accommodating part 121R (or the electrode assembly 121EA (refer to FIG. 2)) and the first and second electrode terminals 121L1 and 121L2.

### (Eighth Embodiment)

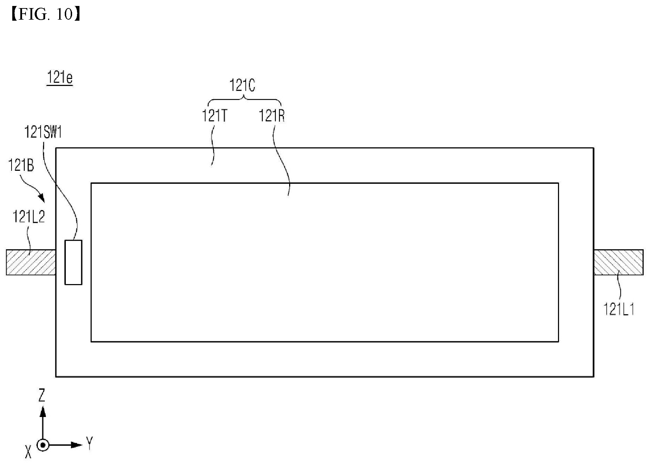

FIG. 10 is a plan view illustrating a battery cell 121e according to other exemplary embodiments.

Referring to FIG. 10, the battery cell 121e may include a cell case 121C, an electrode assembly 121EA (refer to FIG. 2), a first electrode terminal 121L1, a second electrode terminal 121L2, and a beat generator 121B.

The cell case 121C, the electrode assembly 121EA (refer to FIG. 2), and the beat generator 121B are substantially the same as those described with reference to FIGS. 1 and 2, and thus redundant descriptions thereof will be omitted.

The battery cell 121e according to exemplary embodiments may be a bidirectional cell. Accordingly, the first and second electrode terminals 121L1 and 121L2 may protrude from the cell case 121C in opposite directions. The first and second electrode terminals 121L1 and 121L2 may be spaced apart from each other with the accommodating part 121R of the cell case 121C interposed therebetween.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery cell comprising:
an electrode comprising a positive electrode, a negative electrode, and a separator;
a cell case comprising an accommodating part in which the electrode is accommodated and a terrace surrounding the accommodating part; and
a beat generator coupled to the cell case,
wherein the beat generator is configured to apply an acoustic beat into the cell case.

2. The battery cell of claim 1, wherein the beat generator comprises a first acoustic wave generator configured to generate a first acoustic wave and a second acoustic wave generator configured to generate a second acoustic wave, and
wherein a first frequency of the first acoustic wave is different from a second frequency of the second acoustic wave.

3. The battery cell of claim 2, wherein a frequency of each of the first and second acoustic waves is in a range of 10 MHz to 200 MHz, and
wherein a difference in the frequency of each of the first and second acoustic waves is in a range of 1 MHz to 5 MHz.

4. The battery cell of claim 2, wherein the first acoustic wave generator comprises a first interdigital transducer having a first period, and
wherein the second acoustic wave generator comprises a second interdigital transducer having a second period different from the first period.

5. The battery cell of claim 2, wherein the first and second acoustic wave generators are spaced apart from each other with the cell case interposed therebetween.

6. The battery cell of claim 2, wherein each of the first and second acoustic wave generators is on the first surface of the cell case.

7. The battery cell of claim 2, wherein a distance between the first and second acoustic wave generators is 10 cm or less.

8. The battery cell of claim 2, wherein each of the first and second acoustic wave generators is coupled to the terrace.

9. The battery cell of claim 2, wherein one of the first and second acoustic wave generators is coupled to the accommodating part.

10. The battery cell of claim 2, wherein each of the first and second acoustic wave generators is spaced apart from each other with the accommodating part interposed therebetween.

11. The battery cell of claim 2, further comprising a first electrode terminal and a second electrode terminal connected to the electrode,
wherein the first and second acoustic wave generators are spaced apart from the first and second electrode terminals with the accommodating part interposed therebetween.

12. The battery cell of claim 2, further comprising a first electrode terminal and a second electrode terminal connected to the electrode,
wherein one of the first and second acoustic wave generators is interposed between the first and second electrode terminals.
